# EUROPÄISCHE PATENTSCHRIFT

(11) **EP 3 608 639 B1**
(45) Veröffentlichungstag und Bekanntmachung des Hinweises auf die Patenterteilung: **11.05.2022**
(21) Anmeldenummer: 19189956.6
(22) Anmeldetag: 05.08.2019
(51) Int. Cl.: G01F 1/66, G01F 25/00

(54) **VERFAHREN ZUM BETRIEB EINER MESSEINRICHTUNG**
METHOD FOR OPERATING A MEASURING DEVICE
PROCÉDÉ DE FONCTIONNEMENT D'UN DISPOSITIF DE MESURE

(30) Priorität: 11.08.2018 DE 102018006381
(43) Veröffentlichungstag der Anmeldung: 12.02.2020
(73) Patentinhaber: Diehl Metering GmbH, 91522 Ansbach (DE)
(72) Erfinder: Mayle, Michael, 91522 Ansbach (DE); Ploß, Peter, 95445 Bayreuth (DE); Benkert, Andreas, 91522 Ansbach (DE)
(74) Vertreter: Diehl Patentabteilung

(56) Entgegenhaltungen:
- WO-A1-2014/021846
- US-A- 5 277 070
- US-A1- 2011 271 769
- US-A1- 2015 292 926
- US-A1- 2017 298 597

## Beschreibung

Die Erfindung betrifft ein Verfahren zum Betrieb einer Messeinrichtung, die zur Ermittlung einer ein Fluid und/oder eine Fluidströmung des Fluids betreffenden Fluidgröße dient und ein das Fluid aufnehmendes und/oder von dem Fluid durchströmbares Messrohr und einen ersten und einen zweiten voneinander beabstandet an dem Messrohr angeordneten Schwingungswandler umfasst. Daneben betrifft die Erfindung eine Messeinrichtung.

Eine Möglichkeit einen Durchfluss oder andere ein Fluid betreffende Messgrößen zu erfassen, sind Ultraschallzähler. Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflexionen an Wänden oder speziellen Reflexionselementen zu einem zweiten Ultraschallwandler geführt wird. Aus einer Laufzeitdifferenz zwischen den Laufzeiten der Ultraschallwelle zwischen den Ultraschallwandlern bei einer Vertauschung von Sender und Empfänger kann eine Durchflussgeschwindigkeit durch das Messrohr bestimmt werden.

Aufgrund von Produktionstoleranzen der Komponenten der Messeinrichtung, insbesondere von genutzten Schwingungswandlern bzw. der diese steuernden Elektronik, wird hierbei typischerweise jedoch auch dann, wenn das Fluid in dem Messrohr steht, eine Laufzeitdifferenz gemessen, woraus ein sogenannter Nullflussfehler resultiert. Dieser Nullflussfehler wird typischerweise nach der Herstellung bei einer Kalibrierung der Messeinrichtung ermittelt und fest in dieser gespeichert, um die Ermittlung eines korrigierten Durchflusswertes zu ermöglichen. Problematisch hierbei ist, dass sich dieser Nullflussfehler aufgrund einer Alterung der Komponenten der Messeinrichtung verändern kann. Diese Problematik wird typischerweise dadurch vermieden, dass die gesamte Messeinrichtung bzw. die relevanten Komponenten der Messeinrichtung ausgetauscht werden, bevor ein entsprechender Fehler allzu groß wird. Dies kann jedoch zu einem unnötig frühen Wechseln der Zähler und somit zu unnötigen Kosten und einem unnötigen Ressourcenverbrauch führen.

Alternativ wird beispielsweise in der Druckschrift DE 44 22 367 C1 vorgeschlagen, den Nullflussfehler im Betrieb wiederholt zu messen, wobei in der genannten Druckschrift hierfür ein separater Messkanal mit stehendem Fluid genutzt wird. Dies führt jedoch zu einer Erhöhung der Komplexität und des Bauraumverbrauchs der Messeinrichtung.

Zudem kann eine derartige kontinuierliche Korrektur des Nullflussfehlers je nach konkreter Ausführung potentiell Manipulationsmöglichkeiten eröffnen und somit problematisch bezüglich der Zulassung der Messeinrichtung für bestimmte Messaufgaben sein.

Patentdokument US 2015/292926 A1 D1 offenbart einen Ultraschall-Durchflussmesser, bei dem die durchschnittliche Differenz der Laufzeiten regelmäßig berechnet und mit einem vorgegebenen Schwellenwert verglichen wird. Liegt die Differenz unter dem Schwellenwert, so stellt der Computer fest, dass ein Durchflussmangel vorliegt. Dann wird ein weiterer Mittelwert gebildet und mit einem anderen, niedrigeren Schwellenwert verglichen, und wenn dieser unter dem zweiten Schwellenwert liegt, wird dieser zweite Mittelwert als Korrekturterm für den Nullfluss gewählt.

Der Erfindung liegt somit die Aufgabe zugrunde, ein Verfahren zum Betrieb einer Messeinrichtung anzugeben, das demgegenüber verbessert ist, wobei insbesondere trotz einer einfachen technischen Ausgestaltung der Messeinrichtung ermöglicht werden soll, einen unnötigen Austausch der Einrichtung bzw. von deren Komponente zu vermeiden. Die Aufgabe wird erfindungsgemäß durch ein Verfahren der eingangs genannten Art gelöst, wobei eine erste Laufzeit erfasst wird, nach der ein Ultraschallsignal, das durch den ersten Schwingungswandler angeregt wird, nachdem es über einen Ausbreitungspfad, der ausschließlich Komponenten der Messeinrichtung umfasst, zu dem zweiten Schwingungswandler geführt wird, an dem zweiten Schwingungswandler erfasst wird, und eine zweite Laufzeit erfasst wird, nach der ein Ultraschallsignal, das durch den zweiten Schwingungswandler angeregt wird, nachdem es über den Ausbreitungspfad zu dem ersten Schwingungswandler geführt wird, an dem ersten Schwingungswandler erfasst wird, wonach überprüft wird, ob eine Hinweisbedingung erfüllt ist, deren Erfüllung von der Laufzeitdifferenz zwischen der ersten und der zweiten Laufzeit abhängt, wobei bei Erfüllung der Hinweisbedingung ein Hinweis an einen Benutzer ausgegeben wird und/oder eine Hinweisnachricht an eine externe Einrichtung gesendet wird und/oder wenigstens ein Korrekturparameter, der im Rahmen der Ermittlung der Fluidgröße genutzt wird, angepasst wird.

Im Rahmen des erfindungsgemäßen Verfahrens werden Laufzeiten für die Ultraschallsignale entlang einem Ausbreitungspfad ermittelt, der ausschließlich über Komponenten der Messeinrichtung verläuft. Insbesondere kann das Ultraschallsignal hierbei durch die Seitenwand des Messrohrs geführt werden. Zudem kann der Ausbreitungspfad Kopplungselemente umfassen, die zwischen dem jeweiligen Schwingungswandler und der Seitenwand des Messrohrs angeordnet sind. Wie später noch genauer erläutert werden wird, ist es hierbei möglich, dass das Ultraschallsignal zusätzlich über einen weiteren Ausbreitungspfad über das Fluid zu dem anderen Schwingungswandler geführt wird. Es ist hierbei jedoch typischerweise problemlos möglich, empfangsseitig zwischen dem ausschließlich über Komponenten der Messeinrichtung geführten Ultraschallsignal und dem über das Fluid geführte Ultraschallsignal zu unterscheiden, da die Laufzeitdifferenz zwischen den Laufzeiten für diese beiden Ausbreitungspfade deutlich größer sein kann, als die Dauer der Aussendung des Ultraschallsignals.

Da die erste und zweite Laufzeiten für eine Signalausbreitung ausschließlich über Komponenten der Messeinrichtung, also nicht über das Fluid, sind, ist die ermittelte Laufzeitdifferenz im Wesentlichen unabhängig von einer Strömungsgeschwindigkeit des Fluids in der Messeinrichtung und wird somit primär durch die eingangs beschriebene Laufzeitdifferenz für die Ausbreitungsrichtungen aufgrund von Komponententoleranzen bzw. auf Grund der Alterung der einzelnen Komponenten bedingt. Die ermittele Laufzeitdifferenz kann somit ein Maß für einen im aktuellen Betriebszustand der Messeinrichtung auftretenden Nullflussfehler sein. Wie später noch genauer erläutert werden wird, kann die Hinweisbedingung insbesondere dann erfüllt sein, wenn die Laufzeitdifferenz stark von einem Referenzwert abweicht, das heißt insbesondere ein deutlich anderer Nullflussfehler vorliegt, als er aufgrund des Referenzwertes, also beispielsweise aufgrund einer herstellerseitigen Kalibrierung, erwartet würde. Dies kann auf eine Änderung des Verhaltens der Komponenten der Messeinrichtung aufgrund einer Alterung oder aufgrund anderer Fehlfunktionen hinweisen, die einen Nullflussfehler beeinflussen können.

Im Fall der Erfüllung der Hinweisbedingung kann erfindungsgemäß ein Hinweis an einen Benutzer ausgegeben werden bzw. eine Hinweisnachricht an eine externe Einrichtung gesendet werden. Somit kann ein Anbieter bzw. ein Endkunde oder anderweitiger Nutzer der Messeinrichtung informiert werden, dass die Messeinrichtung gewartet oder ausgetauscht werden sollte, um zukünftige Messfehler, beispielsweise aufgrund einer fehlerhaften Ermittlung eines Dauerflusses, zu vermeiden. Eine Hinweisgabe an einen Benutzer kann beispielsweise über ein Display, einen Lautsprecher, ein Leuchtmittel, beispielsweise eine Leuchtdiode, oder Ähnliches, erfolgen. Die Ausgabe kann insbesondere ausschließlich dann erfolgen, wenn die Hinweisbedingung erfüllt ist. Beispielsweise kann auf einem Display ein Warnsymbol oder eine bestimmte Nachricht dargestellt werden. Bei einem Lautsprecher kann ein Warnton, eine Sprachnachricht oder Ähnliches ausgegeben werden. Leuchtmittel können beispielsweise dauerhaft leuchten, blinken oder mit einem bestimmten Blinkmuster blinken, wenn die Hinweisbedingung erfüllt ist.

Eine Übertragung der Hinweisnachricht kann beispielsweise an eine Zentraleinrichtung eines Versorgers, ein Mobiltelefon eines Endanwenders oder eines Servicemitarbeiters, der Wartungen durchführen kann, oder Ähnliches erfolgen. Zur Nachrichtenübertragung können übliche Kommunikationsprotokolle, beispielsweise Mobiltelefonieprotokolle wie GPRS oder SMS, aber auch W-LAN, Bluetooth^{®} oder Ähnliches, bevorzugt auch Protokolle aus dem Smart-Home- bzw. loT- (Internet of Things) Umfeld wie ZigBee^{®}, Z-Wave^{®}, NB-loT, LoRa^{®} oder SigFox^{®}, genutzt werden.

Führt beispielsweise eine Alterung von Komponenten der Messeinrichtung nur zu einer geringen Varianz der Laufzeitdifferenz, so kann es unter Umständen unnötig sein, die Messeinrichtung zu wechseln oder zu warten. Es kann auch gewünscht sein, die Messgenauigkeit zu verbessern, bis eine Wartung oder ein Wechsel der Messeinrichtung erfolgen kann. Daher kann bei Erfüllung der Hinweisbedingung auch ein Korrekturparameter, der im Rahmen der Ermittlung der Fluidgröße genutzt wird, angepasst werden. Hierbei kann es sich beispielsweise um einen Offset handeln, der im Rahmen der Ermittlung eines Durchflusses genutzt wird.

Durch die beschriebenen Maßnahmen wird es mit geringem technischen Aufwand ermöglicht, einen Benutzer oder einen Versorger zu informieren, falls aufgrund einer Alterung oder anderer Defekte der Messeinrichtung eine Änderung des Nullflussfehlers zu erwarten ist, womit eine Wartung oder ein Wechsel der Messeinrichtung zweckmäßig sein kann. Zudem kann bedarfsgerecht ein Korrekturparameter angepasst werden. Hierdurch kann erreicht werden, dass Messeinrichtungen über längere Zeiträume ohne eine Wartung und/oder einen Wechsel betrieben werden können bzw. so betrieben werden, dass eine Wartung oder ein Wechsel nur dann erfolgt bzw. erfolgen muss, wenn dies tatsächlich aufgrund einer Alterung der Komponenten der Messeinrichtung oder von Defekten erforderlich ist. Hierdurch können Ressourcenverbrauch und Kosten für die Nutzung der Messeinrichtung reduziert werden.

Zur Ermittlung der Fluidgröße können in dem erfindungsgemäßen Verfahren dritte und vierte Laufzeiten zwischen den Schwingungswandlern für einen Ausbreitungspfad erfasst werden, bei dem direkt oder über die Wand des Messrohrs eine Druckwelle im Fluid angeregt wird, die zur Ultraschallübertragung genutzt wird, und in Abhängigkeit einer Laufzeitdifferenz dieser Laufzeiten kann die Fluidgröße ermittelt werden. Ein derartiges Vorgehen ist im Stand der Technik prinzipiell bekannt und soll nicht im Detail erläutert werden.

Die Hinweisbedingung kann erfüllt werden oder nur dann erfüllbar sein, wenn eine Abweichung zwischen der Laufzeitdifferenz und einem Referenzwert für die Laufzeitdifferenz einen vorgegebenen Abweichungsgrenzwert überschreitet oder erreicht. Der Referenzwert für die Laufzeitdifferenz kann herstellerseitig vorgegeben sein und beispielsweise auf einer Steuereinrichtung der Messeinrichtung gespeichert sein. Er kann im Rahmen einer Kalibrierung der Messeinrichtung, insbesondere auf die gleiche Weise wie die Laufzeitdifferenz zwischen der ersten und zweiten Laufzeit, ermittelt werden. Der Referenzwert kann im Rahmen der Herstellung, vor der Installation der Messeinrichtung am Einsatzort, nach der Installation jedoch ohne Fluid im Messrohr oder auch mit Fluid im Messrohr gemessen werden. Es ist jedoch auch möglich, den Referenzwert zur Laufzeit, beispielsweise wiederholt nach bestimmten Betriebsintervallen oder bei Erfüllung bestimmter Bedingungen, zu ermitteln, womit die Hinweisbedingung beispielsweise dann erfüllt sein kann, wenn sich die Laufzeitdifferenz zwischen der ersten und zweiten Laufzeit über ein bestimmtes Zeitintervall oder zwischen zwei bestimmten Betriebssituationen um mehr als den Abweichungsgrenzwert ändert. Der Abweichungsgrenzwert kann hierbei auch in Abhängigkeit der Länge dieses Zeitintervalls vorgegeben werden, indem z. B. eine zulässige Änderungsgeschwindigkeit dieser Laufzeitdifferenz vorgegeben wird.

In dem erfindungsgemäßen Verfahren kann die Temperatur des Fluids und/oder wenigstens einer Komponente der Messeinrichtung erfasst werden, wobei die Erfüllung der Hinweisbedingung zusätzlich von der erfassten Temperatur abhängt. Beispielsweise können Temperatursensoren an bestimmten Komponenten vorgesehen sein bzw. in das Fluid ragen. Eine Berücksichtigung der Temperatur kann vorteilhaft sein, da die Ausbreitungsgeschwindigkeit des Ultraschallsignals in wenigstens einer Komponente der Messeinrichtung temperaturabhängig sein kann. Daher können beispielsweise bei vorübergehend auftretenden hohen oder tiefen Temperaturen Abweichungen der Laufzeitdifferenz auftreten, die jedoch rein temperaturbedingt sind und nicht durch Alterung bzw. Defekte der Komponenten verursacht sind. Es kann daher beispielsweise vorgesehen sein, dass die Hinweisbedingung nur dann erfüllbar ist, wenn die erfasste Temperatur in einem vorgegebenen Betriebstemperaturintervall liegt.

Besonders bevorzugt kann der Referenzwert in Abhängigkeit der erfassten Temperatur vorgegeben werden. Beispielsweise können mehrere potentielle Referenzwerte vorgegeben werden, aus denen einer in Abhängigkeit der Temperatur ausgewählt wird. Es ist jedoch auch möglich, temperaturabhängig zwischen mehreren vorgegebenen Referenzwerten zu interpolieren oder einen funktionalen Zusammenhang zwischen Referenzwert und Temperatur vorzugeben. Beispielsweise kann im Rahmen einer Kalibrierung der Messeinrichtung ein Wert für die Laufzeitdifferenz zwischen der ersten und zweiten Laufzeit für mehrere Temperaturen ermittelt werden, um eine Look-Up-Tabelle oder Ähnliches für eine temperaturabhängige Vorgabe des Referenzwerts vorzugeben und beispielsweise in einer Steuereinrichtung der Messeinrichtung zu speichern. Die Nutzung eines temperaturabhängigen Referenzwertes ermöglicht es, dass bei der Ermittlung der vorangehend erläuterten Abweichung zwischen Laufzeitdifferenz und Referenzwert die Temperaturabhängigkeit der Laufzeitdifferenz bereits über den temperaturabhängigen Referenzwert berücksichtigt wird. Somit kann insbesondere eine Fehlerkennung einer Wartungs- bzw. Kalibrierbedürftigkeit der Messeinrichtung vermieden werden.

Es kann mehrmals zeitlich beabstandet eine jeweilige erste Laufzeit erfasst werden, nach der ein Ultraschallsignal, das durch den ersten Schwingungswandler angeregt wird, nachdem es über den Ausbreitungspfad, der ausschließlich Komponenten der Messeinrichtung umfasst, zu dem zweiten Schwingungswandler geführt wird, an dem zweiten Schwingungswandler erfasst wird, und eine jeweilige zweite Laufzeit erfasst werden, nach der ein Ultraschallsignal, das durch den zweiten Schwingungswandler angeregt wird und über den Ausbreitungsgrad zu dem ersten Schwingungswandler geführt wird, an dem ersten Schwingungswandler erfasst wird, wonach eine jeweilige Laufzeitdifferenz zwischen der jeweiligen ersten und der zweiten Laufzeit ermittelt werden kann, wobei die Erfüllung der Hinweisbedingung von mehreren dieser Laufzeitdifferenzen, insbesondere von wenigstens drei dieser Laufzeitdifferenzen, abhängen kann.

Im einfachsten Fall kann eine erste Ermittlung der Laufzeitdifferenz dazu dienen, den vorangehend erläuterten Referenzwert zu erfassen, wonach zu späteren Zeitpunkten erfasste Laufzeitendifferenzen mit diesem Referenzwert verglichen werden. Es ist jedoch auch möglich, dass jeweils zeitlich aufeinanderfolgend ermittelte Laufzeitdifferenzen betrachtet werden, wobei insbesondere ein Unterschied dieser Laufzeitdifferenzen, im Speziellen unter Berücksichtigung des Zeitintervalls zwischen diesen Ermittlungen, ausgewertet wird. Beispielsweise kann die Hinweisbedingung erfüllt sein, wenn sich die Laufzeitdifferenz ausreichend schnell ändert, also beispielsweise wenn der Quotient aus dem Unterschied zweier Laufzeitdifferenzen und der Zeit, die zwischen der Erfassung dieser Laufzeitdifferenzen verstrichen ist, einen Grenzwert überschreitet. Eine robustere Erkennung einer Alterung oder von Defekten einer Messeinrichtung, also von Fällen, in denen die Hinweisbedingung erfüllt sein soll, kann jedoch erreicht werden, wenn wenigstens drei oder mehr Laufzeitdifferenzen berücksichtigt werden. Beispielsweise kann eine Ausgleichsgerade bzw. -kurve bestimmt werden, die den zeitlichen Verlauf der Laufzeitdifferenz beschreibt. Hierbei können auch Algorithmen genutzt werden, um einzelne Ausreißer bzw. Outlier, also stark abweichende Werte der Laufzeitdifferenzen, zu erkennen und nicht oder weniger zu berücksichtigen, beispielsweise ein RANSAC-Algorithmus.

Das Ultraschallsignal, das durch den ersten Schwingungswandler zur Ermittlung der ersten Laufzeit angeregt wird, kann zusätzlich über das Fluid zu dem zweiten Schwingungswandler geführt und dort erfasst werden, um eine dritte Laufzeit zu ermitteln, und das Ultraschallsignal, das durch den zweiten Schwingungswandler zur Ermittlung der zweiten Laufzeit angeregt wird, kann zusätzlich über das Fluid zu dem ersten Schwingungswandler geführt und dort erfasst werden, um eine vierte Laufzeit zu ermitteln, wobei die Fluidgröße in Abhängigkeit der Laufzeitdifferenz zwischen der dritten und der vierten Laufzeit ermittelt wird. Die Nutzung einer Laufzeitdifferenz eines Ultraschallsignals, das über das Fluid geführt wird, zur Ermittlung einer Durchflussgeschwindigkeit, ist prinzipiell bekannt und soll nicht detailliert erläutert werden. Durch das beschriebene Vorgehen wird erreicht, dass eine Anregung von Ultraschallsignalen, die ohnehin zur Ermittlung der Fluidgröße erforderlich sind, zusätzlich zur Ermittlung der Laufzeitdifferenz zwischen der ersten und zweiten Laufzeit genutzt werden kann. Das erfindungsgemäße Verfahren ist somit mit geringem Aufwand und mit geringem Energieverbrauch in bestehende Verfahren zur Durchflussmessung integrierbar. Alternativ wäre es auch möglich, diese Messungen separat durchzuführen. Beispielsweise könnten zur Bestimmung der ersten und zweiten Laufzeit reine Oberflächenwellen der Wand des Messrohrs angeregt werden oder Lamb-Wellen, die nicht in das Fluid eingekoppelt werden können. Hierdurch kann unter Umständen ein Einfluss des Fluids auf die ersten und zweiten Laufzeiten weiter verringert werden.

Die Fluidgröße kann eine Durchflussmenge des Fluids durch das Messrohr betreffen, wobei die Hinweisbedingung nur dann erfüllbar sein kann und/oder die Laufzeitdifferenz zwischen der ersten und der zweiten Laufzeit ausschließlich dann ermittelt werden kann, wenn die Fluidgröße über wenigstens ein vorgegebenes Zeitintervall hinweg durchgehend einen Durchflussgrenzwert überschreitet. Wird ein dauerhafter Durchfluss bzw. ein langanhaltender Durchfluss während unerwarteter Zeiten, also beispielsweise nachts, festgestellt, so kann dies auf einen Messfehler, insbesondere einen Nullflussfehler, oder ein Leck in dem fluidführenden System hinweisen. Da die Laufzeitdifferenz zwischen der ersten und der zweiten Laufzeit in dem erfindungsgemäßen Verfahren wie erläutert im Wesentlichen unabhängig von der durch das Messrohr fließenden Fluidmenge ist, kann die Hinweisbedingung dazu dienen, zwischen dem Auftreten eines Nullflussfehlers und eines Lecks zu unterscheiden. Daher kann beispielsweise nur bei einem Leck oder nur bei einem unerwarteten Nullflussfehler ein Hinweis ausgegeben, eine Hinweisnachricht gesendet oder der Korrekturparameter angepasst werden. Bevorzugt können abhängig davon, ob es sich um einen Nullflussfehler oder ein Leck handelt, unterschiedliche Hinweise ausgegeben bzw. unterschiedliche Hinweisnachrichten gesendet werden, beispielsweise indem für diese Fälle unterschiedliche Hinweisbedingungen geprüft werden.

Es kann die oder eine dritte Laufzeit erfasst werden, nach der ein Ultraschallsignal, das durch den ersten Schwingungswandler angeregt und über das Fluid zu dem zweiten Schwingungswandler geführt wird, an dem zweiten Schwingungswandler erfasst wird, und es kann die oder eine vierte Laufzeit erfasst werden, nach der ein Ultraschallsignal, das durch den zweiten Schwingungswandler angeregt und über das Fluid zu dem ersten Schwingungswandler geführt wird, an dem ersten Schwingungswandler erfasst wird, wobei die Fluidgröße in Abhängigkeit einer korrigierten Laufzeitdifferenz ermittelt wird, die ermittelt wird, indem der Korrekturparameter zu der Laufzeitdifferenz zwischen der dritten und der vierten Laufzeit addiert oder von dieser subtrahiert wird. Der Korrekturparameter kann somit dazu dienen, Laufzeitdifferenzen, die aufgrund von produktionsbedingten Komponententoleranzen auftreten und einen Nullflussfehler verursachen können, zu kompensieren. Wird der Korrekturparameter bei Erfüllung der Hinweisbedingung angepasst, kann er insbesondere auf den Wert der Laufzeitdifferenz zwischen der ersten und der zweiten Laufzeit oder einen von dieser Laufzeitdifferenz abhängenden Wert gesetzt werden. Dies ist vorteilhaft, da die gleichen Faktoren, die zu einer Laufzeitdifferenz zwischen der dritten und der vierten Laufzeit bei einem stehenden Fluid führen, auch zu der Laufzeitdifferenz zwischen der ersten und zweiten Laufzeit führen.

Zur Ermittlung der Fluidgröße durch den ersten und/oder den zweiten Schwingungswandler kann eine in der Wand des Messrohrs geführte Lamb-Welle angeregt werden und/oder der erste und/oder der zweite Schwingungswandler können durch die Wand des Messrohrs von dem Fluid getrennt sein. In beiden Fällen werden die Druckschwingungen im Fluid nicht direkt von den Schwingungswandlern angeregt, sondern diese regen zunächst die Wand des Messrohrs zu Schwingungen an, die diese anschließend auf das Fluid überträgt. Hierdurch erfolgt notwendig auch eine gewisse Schwingungseinkopplung in die Wand, die genutzt werden kann, um die erste bzw. zweite Laufzeit zu ermitteln. Die Schwingungswandler können beispielsweise an dem Messrohr angeklemmt sein. Die beschriebene indirekte Anregung der Fluidschwingungen ermöglicht die Umsetzung des erfindungsgemäßen Verfahrens mit besonders geringem Aufwand.

Neben dem erfindungsgemäßen Verfahren betrifft die Erfindung eine Messeinrichtung zur Ermittlung einer ein Fluid und/oder eine Fluidströmung des Fluids betreffenden Fluidgröße, umfassend ein das Fluid aufnehmendes und/oder von dem Fluid durchströmbares Messrohr, einen ersten und einen zweiten voneinander beabstandet an dem Messrohr angeordneten Schwingungswandler und eine Steuereinrichtung, durch die der erste und zweite Schwingungswandler ansteuerbar ist und über den ersten und zweiten Schwingungswandler erfasste Messdaten auswertbar sind, wobei die Messeinrichtung zur Durchführung des erfindungsgemäßen Verfahrens eingerichtet ist. Insbesondere ist die Steuereinrichtung dazu eingerichtet, den ersten und zweiten Schwingungswandler, wie zum erfindungsgemäßen Verfahren erläutert, anzusteuern und die über den ersten und zweiten Schwingungswandler erfassten Messdaten, wie zum erfindungsgemäßen Verfahren erläutert, auszuwerten.

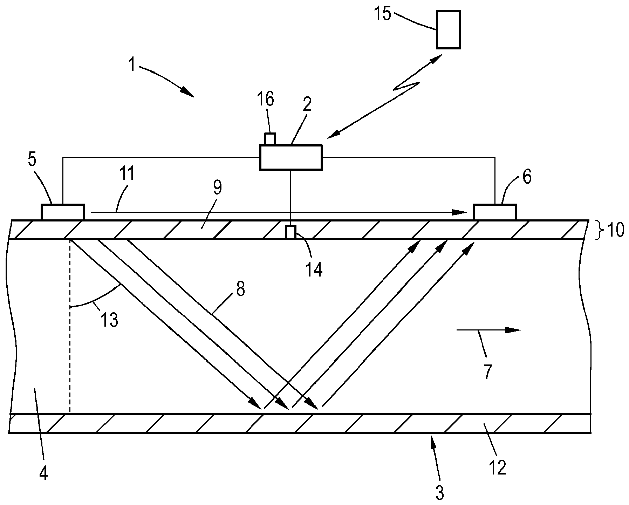

Weitere Vorteile und Einzelheiten der vorliegenden Erfindung ergeben sich aus den nachfolgenden Ausführungsbeispielen und der zugehörigen Zeichnung. Die Figur zeigt ein Ausführungsbeispiel einer erfindungsgemäßen Messeinrichtung, durch die ein Ausführungsbeispiel des erfindungsgemäßen Verfahrens ausführbar ist.

Die Figur zeigt eine Messeinrichtung 1 zur Ermittlung einer ein Fluid und/oder eine Fluidströmung betreffenden Fluidgröße. Das Fluid wird hierbei in einer durch den Pfeil 7 gezeigten Richtung durch einen Innenraum 4 eines Messrohrs 3 geführt. Um die Fluidgröße, insbesondere ein Durchflussvolumen, zu ermitteln, kann durch die Steuereinrichtung 2 eine Laufzeitdifferenz zwischen den Laufzeiten von einem ersten Schwingungswandler 5 zu einem zweiten Schwingungswandler 6 und umgekehrt ermittelt werden, wobei hierbei eine Laufzeit des Ultraschallsignals über das in dem Innenraum 4 geführte Fluid ausgewertet wird. Hierbei wird ausgenutzt, dass diese Laufzeit von einer Geschwindigkeitskomponente des Fluids parallel zu einer Ausbreitungsrichtung eines Ultraschallstrahls 8 durch das Fluid abhängt. Aus dieser Laufzeit kann somit eine über den Pfad des jeweiligen Ultraschallstrahls 8 gemittelte Fluidgeschwindigkeit in Richtung des jeweiligen Ultraschallstrahls 8 und somit näherungsweise eine gemittelte Strömungsgeschwindigkeit in dem von den Ultraschallstrahlen 8 durchquerten Volumen ermittelt werden.

Bei einer idealen Messeinrichtung wäre die Laufzeitdifferenz bei einer Vertauschung von sendendem und empfangendem Schwingungswandler 5, 6 null, wenn das Fluid in dem Innenraum steht, also die Strömungsgeschwindigkeit gleich null ist. In einer realen Messeinrichtung 1 treten jedoch aufgrund von Komponententoleranzen und Alterungsprozessen sogenannte Nullflussfehler auf, das heißt es wird auch bei einer Strömungsgeschwindigkeit des Fluids von null eine Laufzeitdifferenz für den Signaltransport über das Fluid ermittelt. Aufgrund von Komponententoleranzen auftretende Nullflussfehler können dadurch kompensiert werden, dass, beispielsweise im Rahmen der Herstellung der Messeinrichtung 1, ein Korrekturparameter für die Laufzeitdifferenz bzw. den Durchfluss ermittelt und in der Steuereinrichtung 2 abgelegt wird. Da ein entsprechender Fehler temperaturabhängig sein kann, kann über den Temperatursensor 14 die Temperatur wenigstens einer Komponente der Messeinrichtung 1 bzw. des Fluids erfasst werden und diese Größe kann bei der Vorgabe des Korrekturparameters berücksichtigt werden.

Der beschriebene Ansatz ist jedoch nicht geeignet, um aufgrund einer Alterung von Komponenten auftretende Fehler erkennen zu können. Daher müssten, wenn keine weiteren Maßnahmen ergriffen würden, in der Messeinrichtung 1 hoch alterungsresistente Komponenten genutzt werden. Zudem müsste nach einem festen, relativ kurzen Zeitintervall, ein Wechsel der gesamten Messeinrichtung bzw. zumindest der für diese Fehler relevanten Komponenten erfolgen.

Um unnötige Wartungen oder Wechsel der Messeinrichtung 1 zu vermeiden, wird durch die Steuereinrichtung 2 der Zustand der Messeinrichtung 1, insbesondere bezüglich des Nullflussfehlers, überwacht. Hierbei wäre es prinzipiell möglich, den Nullflussfehler zu Zeiten zu ermitteln, zu denen kein Durchfluss erwartet wird oder zu denen über weitere Sensoren festgestellt wird, dass kein Durchfluss vorhanden ist. Um jedoch unabhängig von dem Durchfluss Informationen über das Vorliegen bzw. die Größe des Nullflussfehlers zu erhalten, wird durch die Steuereinrichtung 2 eine erst Laufzeit erfasst, nach der ein Ultraschallsignal, das durch den ersten Schwingungswandler 5 angeregt und ausschließlich über Komponenten der Messeinrichtungen zu dem zweiten Schwingungswandler 6 geführt wird, an dem zweiten Schwingungswandler erfasst wird. Hierbei wird ausgenutzt, dass der Schwingungswandler 5 in der Seitenwand 9 geführte Wellen anregt, die, wie durch den Pfeil 11 dargestellt ist, direkt über die Seitenwand 9 zu dem Schwingungswandler 6 geführt werden können. Zudem wird eine zweite Laufzeit erfasst, nach der ein Ultraschallsignal, das durch den zweiten Schwingungswandler 6 angeregt und ausschließlich über Komponenten der Messeinrichtung zu dem ersten Schwingungswandler 5 geführt wird, an dem ersten Schwingungswandler 5 erfasst wird. Eine Laufzeitdifferenz zwischen diesen beiden Laufzeiten ist ein Maß für den Nullflussfehler, da diese Laufzeitdifferenz durch die gleichen technischen Effekte ausgelöst wird, wie eine Laufzeitdifferenz bei einem Nulldurchfluss für das über das Fluid übertragene Ultraschallsignal.

Die Steuereinrichtung 2 wertet anschließend eine Hinweisbedingung aus, die von der Laufzeitdifferenz für das ausschließlich über die Komponenten der Messeinrichtung geführte Ultraschallsignal abhängt und bei deren Erfüllung über eine Hinweiseinrichtung 16, beispielsweise ein Display, ein Hinweis an einen Nutzer ausgegeben werden kann und/oder eine Hinweisnachricht an eine externe Einrichtung 15, beispielsweise ein Mobiltelefon oder eine Zentraleinrichtung eines Fluidversorgers, gesendet werden kann.

Vorzugsweise ist die Hinweisbedingung dann erfüllt, wenn plötzliche oder starke Änderungen der Laufzeitdifferenz erkannt werden, die insbesondere durch Alterungseffekte von Komponenten der Messeinrichtung 1 oder Defekte verursacht sein können. Solche Änderungen können beispielsweise erkannt werden, indem überprüft wird, ob die Abweichung zwischen der Laufzeitdifferenz und einem vorgegebenen Referenzwert für die Laufzeitdifferenz einen vorgegebenen Abweichungsgrenzwert überschreitet oder erreicht. Hierbei kann der vorgegebene Referenzwert von einer über den Temperatursensor 14 erfassten Temperatur abhängen. Beispielsweise können herstellerseitig im Rahmen einer Kalibrierung der Messeinrichtung verschiedene temperaturabhängige Referenzwerte ermittelt und in einem Speicher der Steuereinrichtung 2 abgelegt werden.

Alternativ kann der Referenzwert auch im laufenden Betrieb ermittelt werden und insbesondere der Laufzeitdifferenz für das Ultraschallsignal, das ausschließlich über Komponenten der Messeinrichtung geführt wird, zu einem vorangehenden Zeitpunkt entsprechen.

In einer Weiterbildung des Verfahrens wäre es möglich, auch zu mehreren vorangehenden Zeitpunkten Laufzeitdifferenzen für dieses Signal zu ermitteln und beispielsweise einen zeitlichen Verlauf der Laufzeitdifferenz für dieses Ultraschallsignal für ein bestimmtes Zeitintervall, beispielsweise über einige Tage, Wochen oder Monate, auszuwerten, um beispielsweise charakteristische Verläufe aufgrund eines Alterungsprozesses oder Defekts zu erkennen.

Zusätzlich oder alternativ zur Hinweisgabe bzw. zum Senden des Hinweissignals ist es auch möglich, dass bei Erfüllung der Hinweisbedingung ein Korrekturparameter, der im Rahmen der Ermittlung der Fluidgröße genutzt wird, angepasst wird. Dieser Korrekturparameter kann insbesondere zu der Laufzeitdifferenz für das durch das Fluid geführte Ultraschallsignal addiert oder von dieser subtrahiert werden, um Einflüsse von Komponententoleranzen bzw. einer Komponentenalterung auszugleichen. Der Korrekturparameter kann insbesondere aus der Laufzeitdifferenz für das ausschließlich über die Komponenten der Messeinrichtung geführte Ultraschallsignal ermittelt werden bzw. diesem entsprechen.

Die Hinweisbedingung kann nur dann erfüllbar sein bzw. die Laufzeitdifferenz für das über die Komponenten der Messeinrichtung geführte Ultraschallsignal kann nur dann ermittelt werden, wenn eine Zusatzbedingung erfüllt ist. Beispielsweise kann überprüft werden, ob während längerer Zeiträume, insbesondere während längerer Zeiträume, während denen kein Durchfluss erwartet wird, beispielsweise nachts, durchgehend ein Durchfluss erfasst wird. Dies indiziert, dass entweder ein Nullflussfehler vorliegt oder dass ein Fluidnetz, an dem die Messeinrichtung angeschlossen ist, leckt. Die Auswertung der Laufzeitdifferenz für das über die Komponenten der Messeinrichtung geführte Ultraschallsignal ermöglicht es hierbei, zwischen einem Leck und einem Nullflussfehler zu unterscheiden, so dass eine bedarfsgerechte Ausgabe von Hinweisen bzw. eine Sendung von Hinweisnachrichten erfolgen kann.

Das beschriebene Verfahren ist insbesondere dann einfach umsetzbar, wenn das über die Wand zum jeweils anderen Schwingungswandler 5, 6 geführte Ultraschallsignal und das über das Fluid zu dem jeweils anderen Ultraschallwandler 5, 6 geführte Ultraschallsignal gemeinsam angeregt werden. Im gezeigten Ausführungsbeispiel erfolgt die Messung der Fluidgröße mithilfe von Lamb-Wellen, die in der Seitenwand 9 des Messrohrs 3 angeregt werden. Solche Wellen können insbesondere angeregt werden, wenn die Dicke 10 der Seitenwand 9 vergleichbar mit der Wellenlänge der Transversalwelle im Festkörper ist, welche sich aus dem Verhältnis der Schallgeschwindigkeit der Transversalwelle im Festkörper und der angeregten Frequenz ergibt. Da bei einer Lamb-Welle beide Oberflächen der Seitenwand 9 schwingen, werden durch die geführte Welle Kompressionsschwingungen des Fluids angeregt, die im gesamten Ausbreitungspfad der geführten Welle in das Fluid abgestrahlt werden. Dies ist schematisch durch die in Strömungsrichtung zueinander versetzten Ultraschallstrahlen 8 dargestellt. Die abgestrahlten Ultraschallstrahlen 8 werden an der gegenüberliegenden Seitenwand 12 reflektiert und über das Fluid zurück zu der Seitenwand 9 geführt. Dort regen die auftreffenden Ultraschallstrahlen 8 erneut eine geführte Welle der Seitenwand 9 an, die durch den Schwingungswandler 6 erfasst werden kann, um die Laufzeit zu bestimmen. Der Ausbreitungspfad des durch das Fluid geführten Ultraschallsignals wird durch den Rayleigh-Winkel 13 vorgegeben, der von der Phasengeschwindigkeit der Lamb-Welle in der Seitenwand 9 abhängt. Zugleich wird die Lamb-Welle, wie schematisch durch den Pfeil 11 dargestellt ist, direkt zu dem Schwingungswandler 6 geführt. Da die beiden gezeigten Ausbreitungspfade deutlich unterschiedliche Längen aufweisen und sich die Ausbreitungsgeschwindigkeiten im Fluid und in der Rohrwand unterscheiden, können bei Nutzung eines nicht allzu langen Anregungspulses zur Anregung der geführten Welle die über diese Ausbreitungspfade geführten Ultraschallsignale zeitlich nacheinander durch den Schwingungswandler 6 erfasst werden. Das erläuterte Vorgehen kann entsprechend für ein Senden des Ultraschallsignals durch den Schwingungswandler 6 und einen Empfang des Ultraschallsignals durch den Schwingungswandler 5 genutzt werden. Hierdurch können mit einem einzigen Anregungssignal sowohl die Laufzeitdifferenz für die durch das Fluid geführte Welle als auch für die durch die Seitenwand 9 geführte Welle erfasst werden. Hierdurch ist das beschriebene Verfahren besonders einfach umsetzbar.

### Bezugszeichenliste

- 1: Messeinrichtung
- 2: Steuereinrichtung
- 3: Messrohr
- 4: Innenraum
- 5: Schwingungswandler
- 6: Schwingungswandler
- 7: Pfeil
- 8: Ultraschallstrahl
- 9: Seitenwand
- 10: Dicke
- 11: Pfeil
- 12: Seitenwand
- 13: Rayleigh-Winkel
- 14: Temperatursensor
- 15: externe Einrichtung
- 16: Hinweiseinrichtung

## Patentansprüche

1. Verfahren zum Betrieb einer Messeinrichtung (1), die zur Ermittlung einer ein Fluid und/oder eine Fluidströmung des Fluids betreffenden Fluidgröße dient und ein das Fluid aufnehmendes und/oder von dem Fluid durchströmbares Messrohr (3) und einen ersten und einen zweiten voneinander beabstandet an dem Messrohr (3) angeordneten Schwingungswandler (5, 6) umfasst, wobei eine erste Laufzeit erfasst wird, nach der ein Ultraschallsignal, das durch den ersten Schwingungswandler (5) angeregt wird, nachdem es über einen Ausbreitungspfad, zu dem zweiten Schwingungswandler (6) geführt wird, an dem zweiten Schwingungswandler (6) erfasst wird, und eine zweite Laufzeit erfasst wird, nach der ein Ultraschallsignal, das durch den zweiten Schwingungswandler (6) angeregt wird, nachdem es über den Ausbreitungspfad zu dem ersten Schwingungswandler (5) geführt wird, an dem ersten Schwingungswandler (5) erfasst wird, wonach überprüft wird, ob eine Hinweisbedingung erfüllt ist, deren Erfüllung von der Laufzeitdifferenz zwischen der ersten und der zweiten Laufzeit abhängt, wobei bei Erfüllung der Hinweisbedingung ein Hinweis an einen Benutzer ausgegeben wird und/oder eine Hinweisnachricht an eine externe Einrichtung (15) gesendet wird und/oder wenigstens ein Korrekturparameter, der im Rahmen der Ermittlung der Fluidgröße genutzt wird, angepasst wird, **dadurch gekennzeichnet, dass** der Ausbreitungspfad ausschließlich Komponenten der Messeinrichtung umfasst.

2. Verfahren nach Anspruch 1, **dadurch gekennzeichnet, dass** die Hinweisbedingung erfüllt wird oder nur dann erfüllbar ist, wenn eine Abweichung zwischen der Laufzeitdifferenz und einem Referenzwert für die Laufzeitdifferenz einen vorgegebenen Abweichungsgrenzwert überschreitet oder erreicht.

3. Verfahren nach Anspruch 1 oder 2, **dadurch gekennzeichnet, dass** die Temperatur des Fluids und/oder wenigstens einer Komponente der Messeinrichtung (1) erfasst wird, wobei die Erfüllung der Hinweisbedingung zusätzlich von der erfassten Temperatur abhängt.

4. Verfahren nach Anspruch 2 und 3, **dadurch gekennzeichnet, dass** der Referenzwert in Abhängigkeit der erfassten Temperatur vorgegeben wird.

5. Verfahren nach einem der vorangehenden Ansprüche, **dadurch gekennzeichnet, dass** mehrmals zeitlich beabstandet eine jeweilige erste Laufzeit erfasst wird, nach der ein Ultraschallsignal, das durch den ersten Schwingungswandler (5) angeregt wird, nachdem es über den Ausbreitungspfad, der ausschließlich Komponenten der Messeinrichtung (1) umfasst, zu dem zweiten Schwingungswandler (6) geführt wird, an dem zweiten Schwingungswandler (6) erfasst wird, und eine jeweilige zweite Laufzeit erfasst wird, nach der ein Ultraschallsignal, das durch den zweiten Schwingungswandler (6) angeregt wird, nachdem es über den Ausbreitungspfad zu dem ersten Schwingungswandler (5) geführt wird, an dem ersten Schwingungswandler (5) erfasst wird, wonach eine jeweilige Laufzeitdifferenz zwischen der jeweiligen ersten und zweiten Laufzeit ermittelt wird, wobei die Erfüllung der Hinweisbedingung von mehreren dieser Laufzeitdifferenzen, insbesondere von wenigstens drei dieser Laufzeitdifferenzen, abhängt.

6. Verfahren nach einem der vorangehenden Ansprüche, wobei das Ultraschallsignal, das durch den ersten Schwingungswandler (5) zur Ermittlung der ersten Laufzeit angeregt wird, zusätzlich über das Fluid zu dem zweiten Schwingungswandler (6) geführt und dort erfasst wird, um eine dritte Laufzeit zu ermitteln, und das Ultraschallsignal, das durch den zweiten Schwingungswandler (6) zur Ermittlung der zweiten Laufzeit angeregt wird, zusätzlich über das Fluid zu dem ersten Schwingungswandler (5) geführt und dort erfasst wird, um eine vierte Laufzeit zu ermitteln, wobei die Fluidgröße in Abhängigkeit der Laufzeitdifferenz zwischen der dritten und der vierten Laufzeit ermittelt wird.

7. Verfahren nach einem der vorangehenden Ansprüche, **dadurch gekennzeichnet, dass** die Fluidgröße eine Durchflussmenge des Fluids durch das Messrohr (3) betrifft, wobei die Hinweisbedingung nur dann erfüllbar ist und/oder die Laufzeitdifferenz zwischen der ersten und der zweiten Laufzeit ausschließlich dann ermittelt wird, wenn die Fluidgröße über wenigstens ein vorgegebenes Zeitintervall hinweg durchgehend einen Durchflussgrenzwert überschreitet.

8. Verfahren nach einem der vorangehenden Ansprüche, **dadurch gekennzeichnet, dass** die oder eine dritte Laufzeit erfasst wird, nach der ein Ultraschallsignal, das durch den ersten Schwingungswandler (5) angeregt und über das Fluid zu dem zweiten Schwingungswandler (6) geführt wird, an dem zweiten Schwingungswandler (6) erfasst wird, und die oder eine vierte Laufzeit erfasst wird, nach der ein Ultraschallsignal, das durch den zweiten Schwingungswandler (6) angeregt und über das Fluid zu dem ersten Schwingungswandler (5) geführt wird, an dem ersten Schwingungswandler (5) erfasst wird, wobei die Fluidgröße in Abhängigkeit einer korrigierten Laufzeitdifferenz ermittelt wird, die ermittelt wird, indem der Korrekturparameter zu der Laufzeitdifferenz zwischen der dritten und der vierten Laufzeit addiert oder von dieser subtrahiert wird.

9. Verfahren nach einem der vorrangehenden Ansprüche, **dadurch gekennzeichnet, dass** zur Ermittlung der Fluidgröße durch den ersten und/oder den zweiten Schwingungswandler (5, 6) eine in der Wand des Messrohrs geführte Lamb-Welle angeregt wird und/oder dass der erste und/oder der zweite Schwingungswandler (5, 6) durch die Wand des Messrohrs von dem Fluid getrennt sind.

10. Messeinrichtung zur Ermittlung einer ein Fluid und/oder eine Fluidströmung des Fluids betreffenden Fluidgröße, umfassend ein das Fluid aufnehmendes und/oder von dem Fluid durchströmbares Messrohr (3), einen ersten und einen zweiten voneinander beabstandet an dem Messrohr (3) angeordneten Schwingungswandler (5, 6, 15) und eine Steuereinrichtung (2), durch die der erste und zweite Schwingungswandler (5, 6) ansteuerbar sind und über den ersten und zweiten Schwingungswandler (5, 6) erfasste Messdaten auswertbar sind, **dadurch gekennzeichnet, dass** sie zur Durchführung des Verfahrens nach einem der vorangehenden Ansprüche eingerichtet ist.

## Claims

1. Method for operating a measuring device (1) which is used in order to determine a fluid quantity relating to a fluid and/or a fluid flow of the fluid and comprises a measuring tube (3), which receives the fluid and/or through which the fluid can flow, and a first and a second oscillation transducer (5, 6) which are arranged at a distance from one another on the measuring tube (3), wherein a first time of flight is recorded, according to which an ultrasound signal which is excited by the first oscillation transducer (5) is recorded, after it has been conducted along a propagation path to the second oscillation transducer (6), at the second oscillation transducer (6), and a second time of flight is recorded, according to which an ultrasound signal which is excited by the second oscillation transducer (6) is recorded, after it has been conducted along the propagation path to the first oscillation transducer (5), at the first oscillation transducer (5), after which a check is made as to whether a report condition is fulfilled, the fulfilment of which depends on the time-of-flight difference between the first and the second time of flight, wherein, if the report condition is fulfilled, a report is output to a user and/or a report message is sent to an external device (15) and/or at least one correction parameter, which is used in the scope of determining the fluid quantity, is adapted, **characterized in that** the propagation path comprises only components of the measuring device.

2. Method according to Claim 1, **characterized in that** the report condition is fulfilled, or is only fulfillable, when a deviation between the time-of-flight difference and a reference value for the time-of-flight difference exceeds or reaches a specified deviation limit value.

3. Method according to Claim 1 or 2, **characterized in that** the temperature of the fluid and/or of at least one component of the measuring device (1) is recorded, the fulfilment of the report condition additionally depending on the recorded temperature.

4. Method according to Claim 2 and 3, **characterized in that** the reference value is specified as a function of the recorded temperature.

5. Method according to one of the preceding claims, **characterized in that**, repeatedly at time intervals, a respective first time of flight is recorded, according to which an ultrasound signal which is excited by the first oscillation transducer (5) is recorded, after it has been conducted along the propagation path which comprises only components of the measuring device (1) to the second oscillation transducer (6), at the second oscillation transducer (6), and a respective second time of flight is recorded, according to which an ultrasound signal which is excited by the second oscillation transducer (6) is recorded, after it has been conducted along the propagation path to the first oscillation transducer (5), at the first oscillation transducer (5), after which a respective time-of-flight difference between the respective first and second times of flight is determined, the fulfilment of the report condition depending on a plurality of these time-of-flight differences, in particular on at least three of these time-of-flight differences.

6. Method according to one of the preceding claims, wherein the ultrasound signal which is excited by the first oscillation transducer (5) in order to determine the first time of flight is additionally conducted through the fluid to the second oscillation transducer (6) and recorded there in order to determine a third time of flight, and the ultrasound signal which is excited by the second oscillation transducer (6) in order to determine the second time of flight is additionally conducted through the fluid to the first oscillation transducer (5) and recorded there in order to determine a fourth time of flight, the fluid quantity being determined as a function of the time-of-flight difference between the third and the fourth time of flight.

7. Method according to one of the preceding claims, **characterized in that** the fluid quantity relates to a flow rate of the fluid through the measuring tube (3), the report condition only being fulfillable, and/or the time-of-flight difference between the first and the second time of flight only being determined, when the fluid quantity continuously exceeds a flow-rate limit value over at least one specified time interval.

8. Method according to one of the preceding claims, **characterized in that** the or a third time of flight is recorded, according to which an ultrasound signal, which is excited by the first oscillation transducer (5) and is conducted through the fluid to the second oscillation transducer (6), is recorded at the second oscillation transducer (6), and the or a fourth time of flight is recorded, according to which an ultrasound signal, which is excited by the second oscillation transducer (6) and is conducted through the fluid to the first oscillation transducer (5), is recorded at the first oscillation transducer (5), the fluid quantity being determined as a function of a corrected time-of-flight difference, which is determined by adding the correction parameter to the time-of-flight difference between the third and the fourth time of flight or subtracting it therefrom.

9. Method according to one of the preceding claims, **characterized in that** a Lamb wave conducted in the wall of the measuring tube is excited for determination of the fluid quantity by the first and/or second oscillation transducers (5, 6), and/or **in that** the first and/or the second oscillation transducer (5, 6) are separated from the fluid by the wall of the measuring tube.

10. Measuring device for determining a fluid quantity relating to a fluid and/or a fluid flow of the fluid, comprising a measuring tube (3) which receives the fluid and/or through which the fluid can flow, a first and a second oscillation transducer (5, 6) which are arranged at a distance from one another on the measuring tube (3), and a control device (2) by which the first and the second oscillation transducer (5, 6) can be driven and measurement data recorded by the first and second oscillation transducers (5, 6) can be evaluated, **characterized in that** it is adapted for carrying out the method according to one of the preceding claims.

## Revendications

1. Procédé pour faire fonctionner un dispositif de mesure (1), lequel sert à déterminer une grandeur de fluide concernant un fluide et/ou un écoulement de fluide du fluide et comprend un tube de mesure (3) accueillant le fluide et/ou pouvant être traversé par un courant du fluide ainsi qu'un premier et un deuxième transducteur de vibrations (5, 6) disposés espacés l'un de l'autre sur le tube de mesure (3), un premier temps de propagation étant acquis, après lequel un signal ultrasonique, lequel est excité par le premier transducteur de vibrations (5), après avoir été guidé vers le deuxième transducteur de vibrations (6) par le biais d'un chemin de propagation, est acquis au niveau du deuxième transducteur de vibrations (6), et un deuxième temps de propagation étant acquis, après lequel un signal ultrasonique, lequel est excité par le deuxième transducteur de vibrations (6), après avoir été guidé vers le premier transducteur de vibrations (5) par le biais du chemin de propagation, est acquis au niveau du premier transducteur de vibrations (5), après quoi un contrôle est effectué afin de vérifier si une condition de notification est satisfaite, dont la satisfaction dépend de la différence de temps de propagation entre le premier et le deuxième temps de propagation, lorsque la condition de notification est satisfaite, une notification étant délivrée à un utilisateur et/ou un message de notification étant envoyé à un dispositif externe (15) et/ou au moins un paramètre de correction, lequel est utilisé dans le cadre de la détermination de la grandeur de fluide, étant adapté, **caractérisé en ce que** le chemin de propagation comprend exclusivement des composants du dispositif de mesure.

2. Procédé selon la revendication 1, **caractérisé en ce que** la condition de notification est satisfaite ou ne peut être satisfaite que lorsqu'un écart entre la différence de temps de propagation et une valeur de référence pour la différence de temps de propagation atteint ou devient supérieur à une valeur limite d'écart prédéfinie.

3. Procédé selon la revendication 1 ou 2, **caractérisé en ce que** la température du fluide et/ou d'au moins un composant du dispositif de mesure (1) est acquise, la satisfaction de la condition de notification étant en plus dépendante de la température acquise.

4. Procédé selon la revendication 2 ou 3, **caractérisé en ce que** la valeur de référence est prédéfinie en fonction de la température acquise.

5. Procédé selon l'une des revendications précédentes, **caractérisé en ce qu'**un premier temps de propagation respectif est acquis plusieurs fois de manière espacée dans le temps, après que ledit signal ultrasonique, lequel est excité par le premier transducteur de vibrations (5), après avoir été guidé vers le deuxième transducteur de vibrations (6) par le biais du chemin de propagation, lequel comprend exclusivement des composants du dispositif de mesure (1), est acquis au niveau du deuxième transducteur de vibrations (6), et un deuxième temps de propagation respectif est acquis, après lequel un signal ultrasonique, lequel est excité par le deuxième transducteur de vibrations (6), après avoir été guidé vers le premier transducteur de vibrations (5) par le biais du chemin de propagation, est acquis au niveau du premier transducteur de vibrations (5), après quoi une différence de temps de propagation respective entre le premier et le deuxième temps de propagation est déterminée, la satisfaction de la condition de notification dépendant de plusieurs de ces différences de temps de propagation, notamment d'au moins trois de ces différences de temps de propagation.

6. Procédé selon l'une des revendications précédentes, le signal ultrasonique, qui est excité par le premier transducteur de vibrations (5) en vue de déterminer le premier temps de propagation, étant en plus guidé par le biais du fluide vers le deuxième transducteur de vibrations (6) et y étant acquis afin de déterminer un troisième temps de propagation, et le signal ultrasonique, qui est excité par le deuxième transducteur de vibrations (6) en vue de déterminer le deuxième temps de propagation, étant en plus guidé par le biais du fluide vers le premier transducteur de vibrations (5) et y étant acquis afin de déterminer un quatrième temps de propagation, la grandeur de fluide étant déterminée en fonction de la différence de temps de propagation entre le troisième et le quatrième temps de propagation.

7. Procédé selon l'une des revendications précédentes, **caractérisé en ce que** la grandeur de fluide concerne un débit volumique du fluide à travers le tube de mesure (3), la condition de notification ne pouvant être satisfaite et/ou la différence de temps de propagation entre le premier et le deuxième temps de propagation n'étant exclusivement déterminée que lorsque la grandeur de fluide dépasse continuellement une valeur limite de débit au-delà d'au moins un intervalle de temps prédéfini.

8. Procédé selon l'une des revendications précédentes, **caractérisé en ce que** le ou un troisième temps de propagation est acquis, après lequel un signal ultrasonique, qui est excité par le premier transducteur de vibrations (5) et guidé par le biais du fluide vers le deuxième transducteur de vibrations (6), est acquis au niveau du deuxième transducteur de vibrations (6), et le ou un quatrième temps de propagation est acquis, après lequel un signal ultrasonique, qui est excité par le deuxième transducteur de vibrations (6) et guidé par le biais du fluide vers le premier transducteur de vibrations (5), est acquis au niveau du premier transducteur de vibrations (5), la grandeur de fluide étant déterminée en fonction d'une différence de temps de propagation corrigée en additionnant le paramètre de correction à la différence de temps de propagation entre le troisième et le quatrième temps de propagation ou le soustrayant de celle-ci.

9. Procédé selon l'une des revendications précédentes, **caractérisé en ce que** pour déterminer la grandeur de fluide, une onde de Lamb guidée dans une paroi du tube de mesure est excitée par le premier et/ou le deuxième transducteur de vibrations (5, 6) et/ou **en ce que** le premier et/ou le deuxième transducteur de vibrations (5, 6) sont séparés du fluide par la paroi du tube de mesure.

10. Dispositif de mesure destiné à déterminer une grandeur de fluide concernant un fluide et/ou un écoulement de fluide du fluide, comprenant un tube de mesure (3) accueillant le fluide et/ou pouvant être traversé par un courant du fluide, un premier et un deuxième transducteur de vibrations (5, 6, 15) disposés espacés l'un de l'autre sur le tube de mesure (3) et un dispositif de commande (2), par lequel le premier et le deuxième transducteur de vibrations (5, 6) peuvent être excités et des données de mesure acquises par le biais du premier et du deuxième transducteur de vibrations (5, 6) peuvent être interprétées, **caractérisé en ce qu'**il est conçu pour mettre en œuvre un procédé selon l'une des revendications précédentes.
